# EUROPEAN PATENT APPLICATION

(11) **EP 4 527 210 A1**
(43) Date of publication of application: **26.03.2025**
(21) Application number: 24201119.5
(22) Date of filing: 18.09.2024
(51) Int. Cl.: A23L 13/00, A23L 13/50, A23L 17/00, A23P 20/10, A23P 20/20

(54) **METHOD OF MAKING A COATED FOOD PRODUCT**

(30) Priority: 19.09.2023 GB 202314297
(71) Applicant: Nomad Foods Europe Limited, Feltham, Middlesex TW14 8HA (GB)
(72) Inventor: BAAMONDE, Angybel, Middlesex, TW14 8HA (GB); DIBBERN, Timo, Middlesex, TW14 8HA (GB); D'IGNOTI, Valeria, Middlesex, TW14 8HA (GB)
(74) Representative: Haseltine Lake Kempner LLP

(57) **Abstract**

A method of making a coated food product is described. The coated food product includes a core, a dust layer disposed on the core, a batter layer disposed on the dust layer, and breadcrumbs disposed on the batter layer. The method comprises spray-coating the breadcrumbs with an oil at a temperature between 50 °C and 90 °C, wherein the oil has a melting point of less than 0 °C.

## Description

### Background

Battered and breaded food products are a popular and convenient food staple. These products are typically pre-fried in oil before they are frozen and sold to the consumer, where the consumer usually reheats the product at home (e.g., by oven-baking, air-frying).

However, since conventional battered and breaded products are fried, this leads to an uptake of a large amounts of oil, often rendering the product greasy and less healthy to certain consumers. Deep-frying products in oil also consumes a large amount of energy, since energy is required both to power the production frier and maintain the oil temperature.

There is therefore a need for new methods of producing battered and breaded food products that are simpler to produce and more energy-efficient, but wherein the resultant food products have improved properties, such as being healthier and/or less greasy. Nevertheless, any new method and new resultant food product needs to have good taste, good palatability, and good stability, particularly such that the coating remains intact during cooking by the consumer without splitting. Any new coated food product also needs to be efficiently mass-processed, cost-effective and compatible with industrial-coating lines.

### Summary of Invention

In a first aspect, there is provided a method of making a coated food product, the coated food product comprising a core, a dust layer disposed on the core, a batter layer disposed on the dust layer, and breadcrumbs disposed on the batter layer, wherein the method comprises spray-coating the breadcrumbs with an oil at a temperature between 50 °C and 90 °C, and wherein the oil has a melting point of less than 0 °C. The resultant coated food product is suitable for freezing. In some embodiments, the coated food product is subjected to a freezing step, after the spray-coating step, to provide a frozen coated food product.

In a second aspect there is provided a coated food product producible or produced by the method of the first aspect, comprising
a core; and
a dust layer disposed around the core
a batter layer disposed around the dust layer,
breadcrumbs disposed on the batter layer; and
an oil layer disposed on the breadcrumbs, wherein the oil layer is present in an amount of less than 5 wt.% of the food product. The resultant coated food product is suitable for freezing. In some embodiments, the coated food product is a frozen coated food product.

Herein is also disclosed, a coated food product comprising
a core; and
a dust layer disposed around the core
a batter layer disposed around the dust layer,
breadcrumbs disposed on the batter layer; and
an oil layer disposed on the breadcrumbs, wherein the oil layer is present in an amount of less than 5 wt.% of the food product. The resultant coated food product is suitable for freezing. In some embodiments, the coated food product is a frozen coated food product.

The method of the present invention importantly differs from methods used to make traditional battered and breaded food products in the art since it avoids a pre-frying step of the batter and breadcrumb layer. The method of the invention instead involves spray-coating the batter and breadcrumbs with oil, and is therefore simpler and more energy efficient compared with traditional methods. The resulting product coated food product is suitable for freezing, (i.e., without any subsequent heating or cooking step after battering, breading and spray-coating and prior to freezing). Since no-heat treatment step is required prior to freezing, the method of the invention saves energy costs, and simplifies the coating process compared with prior methods. In some instances, this may result in an oil layer that is less rancid compared with battered and breaded products that have been pre-fried or heat-treated. Further, the methods of the invention enables the production of food products that can be healthier (e.g., less total oil) less greasy, and/or more appealing to the consumer as compared to other breaded and battered products made by frying. Different from a frying step which typically sets breadcrumbs together, spray-coating the breadcrumbs provides the consumer with a unique yet crispy eating experience. The products of the invention may have reduced or acceptable levels of oil, calories and fat (specifically unhealthy saturated fat). Further, different from other spray-coating methods disclosed in the art, the present method produces a coated food product that is suitable for freezing despite not having been fried or heat-treated after battering and breading.

The present inventors, in particular, found that spray-coating the breadcrumbs with oil at a temperature from 50 °C to 90 °C was key such that the oil had an appropriate fluidity and viscosity for an acceptable level of oil uptake on the surface of the product of the invention. It was found that heating the oil to a temperature of between 50 and 90 °C before and during spraying guaranteed an optimum level of spray-coated oil, with a temperature of between 60 °C and 80°C, being most preferred. Lowering the temperature below 50 °C and/or increasing the temperature above 90°C meant that the fluidity and viscosity of the oil was affected which compromised the level of oil uptake on the surface of the product. More specifically, lowering the temperature below 50 °C meant that the oil was harder to spray, while raising the temperature above 90 °C resulted in a "thinner" oil-coating layer which affected the uniformity of the oil layer and the overall oil uptake (i.e., the amount of spray-coated oil in coated food product). These spray-coating temperatures and the effects on oil viscosity were suitable with various oils having a melting point of 0 °C, including, rapeseed oil or sunflower oil.

Despite being formed by a different method compared with typical breaded and battered products, the present inventors surprisingly found that coated food products produced by the method of the invention, had a good appearance and could be subsequently cooked or oven-baked or air-fried by the consumer without any splitting of the coating layer. This was unexpected due to the lack of a deep-frying or heat treatment step, which usually "seals" the battered and breaded food product and can remove any excess moisture from the semi-finished product. During development, the present inventors found that the presence of a dust layer surrounding the core was key for preventing splitting of the coating using the spray-coating method.

During consumer research, products made by the method of invention received positive feedback. In one particular research (over 150 consumers), purchase intent was in line with expectations for a scalable and successful new product development. Additionally overall product liking and attributes (colour, taste, texture...) reached the benchmark for good product performance (Benchmark provided by Consumer Research Agency based on their database). During qualitative research, products were also praised for taste, texture and appearance which are direct results of the method of invention.

In a third aspect, and in a preferred embodiment of the first aspect, is a method of making a coated food product, the coated food product comprising a core, a dust layer disposed on the core, an batter layer disposed on the dust layer, and breadcrumbs disposed on the batter layer, wherein the method comprises spray-coating the breadcrumbs with an oil at a temperature between 50 °C and 90 °C, and wherein the oil has a melting point of less than 0 °C, and wherein the breadcrumbs comprise up to 20 wt.% of breadcrumbs with a particle size of greater than 5.6 mm as determined by sieve analysis, preferably wherein the breadcrumbs comprise up to 10 wt.% of breadcrumbs with a particle size of greater than 5.6mm as determined by sieve analysis. In some embodiments, the coated food product is suitable for freezing. In some embodiments, the coated food product is a frozen coated food product.

In a fourth aspect, and in a preferred embodiment of the second aspect, there is provided a coated food product producible or produced by the method of the fourth aspect, comprising
a core; and
a dust layer disposed around the core
a batter layer disposed around the dust layer,
breadcrumbs disposed on the batter layer; wherein the breadcrumbs comprise up to 20 wt.% of breadcrumbs with a particle size greater than 5.6 mm, more preferably up to 10 wt.% of breadcrumbs with a particle size greater than 5.6 mm and
an oil layer disposed on the breadcrumbs, wherein the oil layer is present in an amount of less than 5 wt.% of the food product.

In certain instances (i.e., according to third aspect of the invention and preferred embodiments of the first aspect), the present inventors also used the methods of the present invention to create a unique and healthy food product with an appealing "handmade" appearance and a distinct new crisp texture as compared with traditionally prepared battered and breaded food products. In these instances, the products produced by the method of the invention comprised breadcrumbs comprising an extra-large size or "flake" of breadcrumbs compared with traditional battered and breaded products, wherein the extra-large size or flake of breadcrumbs have a particle size of at least 5.6 mm. This provided a breadcrumb layer with a novel texture as compared with traditional breaded and battered products, as well as having a "handmade" looking appearance. The use of these extra large particles was compatible with a spray-coating method and could be achieved despite being machine-produced and prepared using standard industrial battering and breading coating lines. Using such extra large breadcrumbs would be less compatible with traditional methods of making breaded and battered products which involve frying the product in oil for 30-40 seconds since the extra large particles would be prone to falling off the surface of the product into the frier. This would lead to both wastage and residue in the frier.

The present inventors nevertheless found that there was an optimal range of these "extra-large" breadcrumbs such that the method was compatible with mass production. While a certain amount of large breadcrumbs was preferred in order to obtain a coating with a unique texture and novel appearance, too high a wt.% of these "extra large" breadcrumbs as a percentage of the breadcrumb layer led to increased losses during mass production, since the surface of the product could only adequately retain a certain % of these extra large particles.

Too high a wt.% (e.g., > 20 wt.%) of the "extra large breadcrumbs" also compromised the level of oil uptake on the battered and breaded coating such that it was not optimal.

The following further embodiments of the present invention may also have one or more of the following advantages over and above the prior art.

In some embodiments, the breadcrumbs or breadcrumb layer may comprise one or more flavourings, preferably wherein the flavourings are present in an amount from 0.5 wt.% to 20 wt.% of the breadcrumbs or breadcrumb layer. This is different from traditionally prepared battered and breaded products where flavourings are not included in the breadcrumbs or breadcrumb layer to avoid being burnt in a subsequent frying step.

In some embodiments, the batter layer is disposed on the dust layer by a batter mixture, wherein the batter mixture has a flow time of between 10 and 30 seconds as determined by a viscosity flow cup (e.g., a B6 viscosity flow cup). A batter mixture with a viscosity in this range was found to provide optimal and more consistent pick-up of the breadcrumbs which are disposed on the batter layer. In some embodiments, the batter mixture comprises one or more flavourings, (i.e., in the amounts specified below), provided the batter mixture has a flow time of between 10 and 30 seconds as determined by a viscosity flow cup, for example, between 12 and 22 seconds as determined by a viscosity flow cup. This provides a food product with an improved sensory experience for the consumer.

In some embodiments, the breadcrumbs are spray-coated for less than 20 seconds, and more preferably for between 10 and 20 seconds. This may be referred to as the residence time of the breadcrumbs or semi-finished breaded product in a spray-coating apparatus. In some embodiments, the spray-coating step is performed by spray-coating the breadcrumbs on a moving belt with a length of 3200 mm to 4000, for example, 3600 mm. In some embodiments, the breadcrumbs are spray-coated with oil at a frequency 700 - 2100 g/min. During optimisation, these parameters were found to provide the best level of oil-uptake on the breadcrumb layer.

In some embodiments, the distance between the breadcrumbs between the breadcrumbs and the nozzles used for spray-coating is at least 150 mm, more preferably between 150 mm and 250 mm. During optimisation of the spray-coating method, it was found that increasing the distance to at least150 mm cm, may lead to more uniform spray-coating across the food product, with less dead edges.

In some embodiments, the breadcrumbs are spray-coated with at least 4 nozzles, or at least 6 nozzles, or at least 8 nozzles, for example, between 4 nozzles and 8 nozzles. In some embodiments, the breadcrumbs are spray-coated with at least 4 nozzles on a first surface of the product, and are spray-coated at least 4 nozzles on a second surface of the product (e.g., top and bottom surface). During optimisation, it was found that a greater number of nozzles provided more consistent and optimal coating than a spray-coating method which used only 2 nozzles.

In preferred embodiments, the core is a frozen fish fillet core. A fish fillet core provides a source of selenium and/or vitamin B12 and/or niacin.

In some embodiments, the product of the invention comprises an oil layer (e.g., a spray-coated oil layer) present in an amount of 2 wt.% to 5 wt.% of the food product, preferably in an amount of 3 wt.% to 5 wt.% of the food product, for example, between 3.5 wt.% and 4.5. This amount of oil provides good sensory attributes and coating integrity to the final coated product. Additionally, it can provide a "healthy" or "healthier" breaded and battered food product (e.g., with less total oil and less oil in the oil layer), while maintaining good organoleptic characteristics of the resultant food product.

In some embodiments, the coated food product of the invention comprises an oil layer (e.g., a spray-coated oil layer) with a peroxide value of less than 10 mEq O₂/kg₂, preferably less than 7 mEq of O₂/kg₂, preferably less than 5 mEq of O₂/kg. Peroxide levels are a good indicator of the rancidity of the product, therefore, low peroxide levels are indicative of a food product with good shelf-life and acceptable or improved freshness. Oil layers which have been heated or which have been formed by frying typically have a peroxide value in excess of 10.

In some embodiments, the coated food product of the invention can have one or more improved or maintained nutritional characteristics as compared with other coated (i.e., breaded and battered) food products on the market. In some embodiments:
- The oil is rapeseed oil, sunflower oil, or olive oil. In some examples, the oil is rapeseed oil. These oils are selected since they are low in unsaturated fats;
   and/or
- The coated food product of the invention has a total fat content of less than 8 wt.%, more preferably less than 7 wt.%, and more preferably less than 6 wt.%, for example, between 4 wt.% and 6 wt.%;
   and/or
- The coated food product of the invention has a saturated fat content of less than 2 wt.%, more preferably less than 1 wt.%, for example, between 0.5 wt.% and 1 wt.%. The resultant products are low in saturated fat;
   and/or
- The coated food product of the invention has a kcal content of less than 200 per 100g of coated food product, more preferably less than 175 g per 100 g of product, for example, between 150 g and 175 g per 100 g of coated food product;
   and/or
- The coated food product of the invention has a protein content of at least 10 wt.%, more preferably at least 11 wt.%, for example, between 11 wt.% and 15 wt.%, or about 12 wt.%. The resulting products are high in protein;
   and/or
- The coated food product of the invention has a carbohydrate content of which sugars of less than 2 wt.%, or less than 1.5 wt.%, or less than 1 wt.%, or less than 0.5 wt.%, for example, between 0.25 wt.% to 1.5 wt.%. The resulting products are low in sugars and/or
- In some embodiments, the coated food product may have a nutri-score of C or above, e.g., a nutri-score of C, B or A. In some examples, the food product of the invention has a nutri-score of B
   and/or
- The coated food product of the invention has a vitamin D content of at least 1 µg per 100 g, more preferably at least 1.5 µg per 100 g, for example, about 1.6 per 100 g.

### Brief Description of Figures

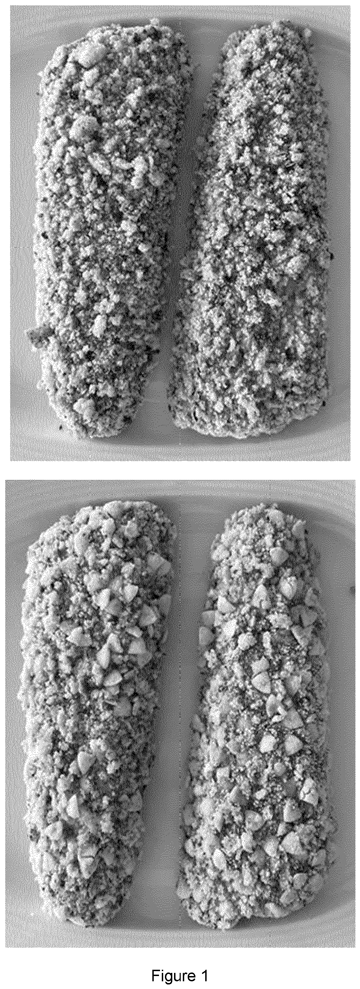

Figure 1 shows an example coated food product of the invention made by the process of the invention. These breadcrumbs in the coating layer comprise a certain proportion of "extra large" breadcrumbs resulting in a product with a unique texture and novel appearance.

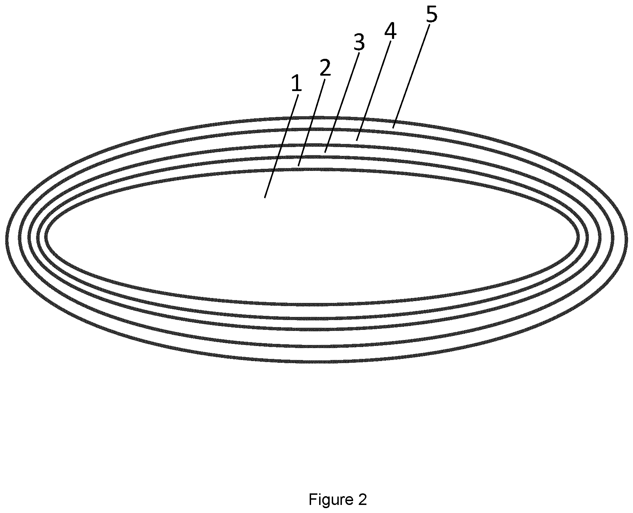

Figure 2 shows an example schematic coated food product of the invention made by the process of the invention. The coated food product comprises a core (1), a dust layer (2) disposed on the core, a batter layer (3) disposed on the dust layer, breadcrumbs (4) disposed on the batter layer and an oil layer (5) disposed on the breadcrumbs.

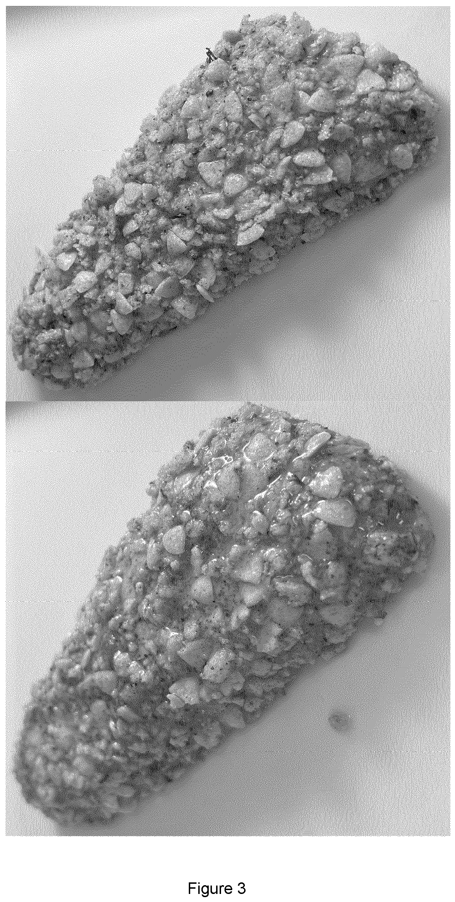

Figure 3 (top) shows an example "Tortilla Lime and Chilli" coated food product of the invention, made by an example process of the invention. The coated food product is formed by spray-coating a battered and breaded food product with rapeseed oil a temperature of 75 °C. Figure 3 (bottom) shows a comparative example food product where the spray-coating is instead performed at ambient temperature. The food product of the invention has a better appearance, with more homogenous oil uptake and which is less greasy.

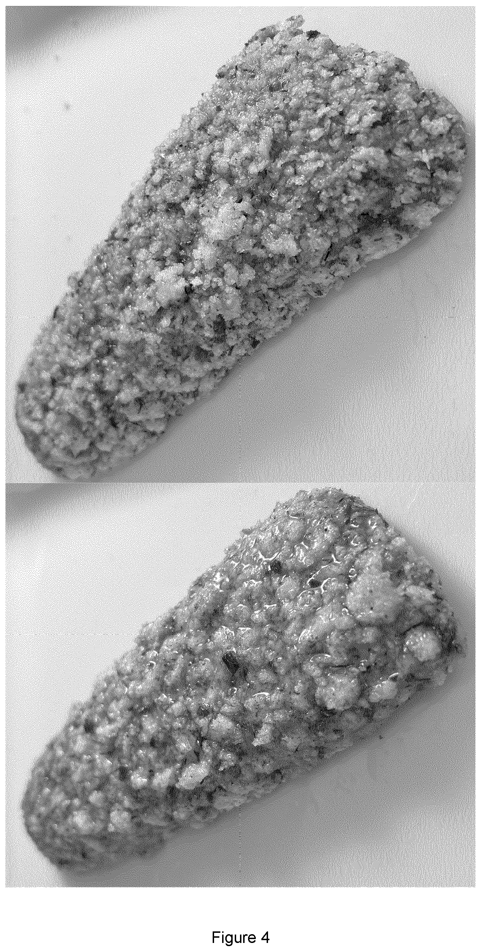

Figure 4 (top) shows an example "Tomato & Thyme Focaccia Style" coated food product of the invention, made by an example process of the invention, following resting for 30 seconds.
The coated food product is formed by spray-coating a battered and breaded food product with rapeseed oil a temperature of 75 °C. Figure 4 (bottom) shows a comparative example food product where the spray-coating is instead performed at ambient temperature. As per Figure 4, the food product of the invention has a better appearance, with more homogenous oil uptake and which is less greasy.

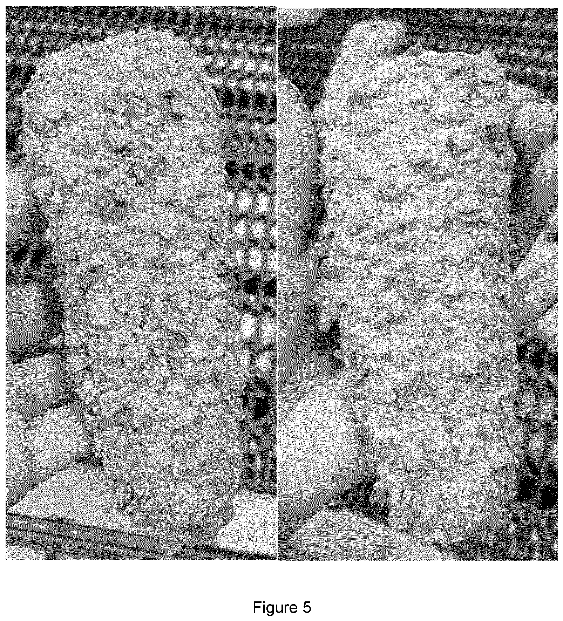

Figure 5 (left) shows an example coated food product of the invention, made by the process of the invention, followed by freezing. The coated food product is formed by spray-coating a battered and breaded food product with rapeseed oil at a controlled temperature range of 70 - 80 °C. Figure 5 (right) shows a comparative food product which is instead sprayed at a temperature of 40 °C showed worse performance after freezing with a more noticeable "white layer".

### Detailed Description

The presently-disclosed subject matter is illustrated by specific but non-limiting embodiments or examples throughout this description. Each example is provided by way of explanation of the present disclosure and is not a limitation thereon.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs. Although any methods, devices, and materials similar or equivalent to those described herein can be used in the practice or testing of the presently-disclosed subject matter, representative methods, and materials are described.

Following long-standing patent law convention, the terms "a", "an", and "the" refer to "one or more" when used in this application, including the claims.

As used herein, the term "comprises" or "comprising" has an open meaning, which allows other, unspecified features to be present. This term embraces, but is not limited to, the semi-closed term "consisting essentially of" and the closed term "consisting of". Unless the context indicates otherwise, the term "comprises" may be replaced with either "consisting essentially of" or "consists of".

The features of any dependent claim may be readily combined with the features of any of the independent claims or other dependent claims. The features of any embodiment may also be readily combined with the features of any other embodiment, unless explicitly referred to or context dictates otherwise. It is intended that any range of component, for example, can be readily combined. It is also intended that any feature of one particular layer can be combined with a feature described for a different layer.

All percentages in the present disclosure are listed as percent by weight on the weight of the total coated food product, unless explicitly noted otherwise.

Sieve analysis referred to herein refers to a method of particle size characterisation using standard sieves. As an example, the sieve analysis may be performed using U.S standard sieves 5.6 mm, 3.35 mm, 1.7 mm, and/or 0.5 mm which may otherwise be known as the ASTM standard meshes No. 3 ½, 6, 7, and 12 and/or 35.

While certain suppliers may be referred to herein, these are intended only to be exemplary and it should be understood that components from other suppliers may be used.

### Method of the invention

Herein is disclosed a method of making a coated food product, the coated food product comprising a core, a dust layer disposed on the core, a batter layer disposed on the dust layer, and breadcrumbs disposed on the batter layer, wherein the method comprises spray-coating the breadcrumbs with an oil at a temperature between 50 °C and 90 °C, and wherein the oil has a melting point of less than 0 °C.

The method of the invention comprises spray-coating the oil at a temperature between 50 °C and 90 °C. The present inventors found that spray-coating the oil at these temperatures meant the oil had an optimal viscosity for spraying. Lowering the temperature below 50 °C and/or increasing the temperature above 90°C meant that the fluidity and viscosity of the oil was compromised which affected the level of, and consistency, oil uptake on the surface of the product. More specifically, lowering the temperature below 50 °C meant that the oil was harder to spray, while raising the temperature above 90 °C resulted in a "thinner" oil-coating layer which affected the uniformity of the oil layer and the overall oil uptake (i.e., the amount of spray-coated oil in coated food product).

In preferred embodiments, the spray-coating takes place at a temperature between 55 °C and 85°C, more preferably between 60 °C and 80 °C, or even more preferably between 70 °C and 80 °C. Spray-coating within these preferred temperature ranges provides optimal spray-coating and the most consistent oil uptake.

In some embodiments, the spray-coating takes place at a temperature of less than or equal to 90 °C, or less than or equal to 85°C, or less than or equal to 80 °C, or less than or equal to 75 °C, or less than or equal to 70 °C, (e.g., between 50 °C and 85 °C, or between 50 °C and 80 °C, between 50 °C and 75 °C or between 50 °C and 70 °C). In some embodiments, the spray-coating takes place at a temperature of greater than or equal to 50 °C, or greater than or equal to 55°C, or greater than or equal to 60 °C, or greater than or equal to 65 °C, or greater than or equal to 70 °C, (e.g., between 50 °C and 90 °C, or between 55 °C and 90 °C, or between 60 °C and 60 °C, or between 70 °C and 90 °C).

The method comprises spray coating the breadcrumbs with an oil that has a melting point of less than 0 °C. Oils with a melting point of less than 0 °C are found to have a suitable viscosity when spray-coated at a temperature of 50 °C and 90 °C. In some embodiments, the oil has a melting point that is less than -5°C, or less than -10 °C, or less than 15 °C, or less than or equal to - 20 °C. In some embodiments, the oil has a melting point that is between - 40 °C and 0°C, or between -30°C and 0 °C, or between -25 °C and 0 °C. The melting point may be as determined by ASTM D5440-17. In some embodiments, the oil is a plant-based oil. In preferred embodiments, the oil comprises at least 50% unsaturated oil or fat, preferably at least 60%, or at least 70%, or at least 80% unsaturated oil or fat. In preferred embodiments, the oil comprises less than 30% saturated oil or fat, or less than 20% saturated oil or fat. In some embodiments, the oil comprises at least 50% of oleic acid, linoleic acid, α-linoleic acid or a combination thereof, preferably at least 60%, or at least 70%, or at least 75% of oleic acid, linoleic acid, α-linoleic acid or a combination thereof. In some embodiments, the oil may be selected from sunflower oil, rapeseed oil, olive oil or vegetable oil. These oils are preferred because they are healthier and low in saturated fats. In an example, the oil is rapeseed oil. Rapeseed oil comprises ~ 61% oleic acid, ~ 21% linoleic acid and ~ 9-11% of α-linoleic acid.

In some embodiments, the breadcrumbs are spray coated with oil at a frequency of between 700 g/min and 2100 g/min. This spray-coating frequency may contribute to an optimal oil uptake in the coated food product. Lower frequencies were found to lead to a less homogenous dispersion of oil droplets.

In some embodiments, the means for spray-coating is a nozzle, or multiple nozzles.

In some embodiments, the oil is spray coated using at least one nozzle, preferably multiple nozzles. In preferred embodiments, the oil is spray coated using at least four nozzles, and in some examples, at least six nozzles, or at least eight nozzles, for example, between four and eight nozzles. The multiple nozzles (e.g., including the at least four nozzles) are configured to simultaneously spray-coat oil on both the top and bottom surface of the food product. In some embodiments, four nozzles are configured to spray-coat oil on the top of the food product, and four nozzles are configured to spray-coat oil on the bottom of the food product. In some embodiments, the nozzles are connected to spinner discs that rotate and distribute oil droplets onto the food product. The nozzle, and preferably nozzles with spinner discs, can improve the homogenous distribution of the oil. It was found during trials that using at least four nozzles provided optimal and more consistent oil uptake on the coated food product as compared with spray-coating using less (e.g., two) nozzles.

In some embodiments, the distance between the breadcrumbs and the means for spray-coating (e.g., multiple, or at least four nozzles) is at least 150 mm, more preferably between 150 mm and 250 mm. A distance of at least 150 mm provides more efficient oil uptake and reduces the amount of dead edges (i.e., edges of the food product which are not coated with oil).

In some embodiments, the spray-coating takes place for less than 20 seconds, preferably for less than or equal to 19 seconds, or for less than 18 seconds, or for less than 17 seconds, or for less than 16 seconds, or preferably for less than or equal to 15 seconds. In some embodiments, the spray coating takes place for between 10 and 20 seconds, more preferably between 11 and 16 seconds. In some embodiments, the spray-coating takes place while the breadcrumbs are moving. In some embodiments, the breadcrumbs are moving on a belt, such as conveyor belt. In some embodiments, the belt has a length of between 3200 cm and 4000 mm, for example, about 3600 mm. In some embodiments, the belt has a speed of between 10 and 20 metres/min, more preferably between 10 and 16 metres/minute, for example, 13.5 metres/minute. These conditions may provide the most optimal oil uptake while simultaneously providing a high turnover of spray-coated food product.

In some examples, the spray-coating may be performed using a spray-coating device manufactured by Costruzioni Meccaniche Industriali S.a.s. - Zampieri S.r.l., Ala (TN). The oil is preferably nebulised prior to coating on the breadcrumbs.

Spray-coating the breadcrumbs with the oil can result in a coated food product with a spray-coated oil layer disposed on the breadcrumbs. This may otherwise be described or referred to as the oil uptake layer or oil surface layer. The oil uptake (e.g., amount of oil that is coated on the surface of resultant food product formed by the method of the present invention), is found to be much less than in comparative methods involving (i) a frying or pre-frying step prior to freezing and/or (ii) dipping the product in cold oil prior to freezing. It is understood that the degree of penetration of the spray-coated oil into the product core is very low using the spray-coating method of the invention.

In some embodiments, the oil layer (i.e., spray-coated oil layer) is present in an amount of less than 5 wt.% of the coated food product, or less than 4.5 wt.% of the coated food product. In some examples, the spray-coated oil layer is present in an amount of less than 4.25 wt.%, or less than 4 wt.%, or less than 3.75 wt.% of the coated food product. In some embodiments, the spray-coated oil layer is present in an amount of 1 wt.% to 5 wt.% of the food product, or from 2 wt.% to 4.75 wt.%, or from 2.5 wt.% to 4.5 wt.%, or from 2.75 wt.% to 4.5 wt.%, or from 3.5 wt.% to 4.5 wt.% of the coated food product.

In some embodiments, the breadcrumbs are coated with between 2.5g and 5g of oil per 100g of food product, or between 2.75 g and 4.5 g of oil per 100g of food product, or between 3.5 g and 4.5 of oil per 100 g of food product.

In some embodiments, the spray-coated oil layer has a peroxide value of less than 10 mEq of O₂/kg, or less than 9 mEq of O₂/kg, or less than 8 mEq of O₂/kg, or less than 7 mEq of O₂/kg, or less than 6 mEq of O₂/kg, or less than 5 mEq of O₂/kg. In some embodiments, the peroxide value may be determined immediately after spray-coating, or within 10 minutes after spray-coating, or within 1 hour of spray-coating. The peroxide value is found to be lower for spray-coated products than for products formed by comparative methods wherein the oil layer on the surface of the product has been heat-treated, for example, by frying or pre-frying. This can be advantageous for improving shelf-life, decreasing rancidity and increasing freshness of the product. This also avoids any rancidity flavour. The peroxide value may be determined by iodometric endpoint determination using sox-let extraction, for example, using the method reported in the analysis report is Reg CEE 2568/1991 Annex III Reg UE 1784/2016. A spray-coated oil layer has a lower peroxide value than an oil layer which has been fried.

In some embodiments, the method comprises i) disposing the breadcrumbs on the batter layer before spray-coating the breadcrumbs or ii) spray-coating the breadcrumbs before disposing the breadcrumbs on the batter layer.

In some embodiments, the method comprises
a) providing a core
b) disposing a dust layer on the core
c) disposing a batter mixture around the core to form a batter layer,
d) coating the batter layer with breadcrumbs, and
e) spray coating the breadcrumbs with an oil at a temperature between 50 and 90 °C, wherein the oil has a melting point of less than 0 °C. The resultant coated food product is suitable for freezing. In some embodiments, the method further comprises f) freezing the food product.

### Core

The coated food product comprises a core, and the method of the invention may comprise providing a core. The core refers to the central part of the coated food product. The core may have any suitable shape, weight, size, or thickness.

The core may be any suitable edible material. In some embodiments, the core is a solid core. In some embodiments, the core is a fish or meat core. The meat or fish core may be cooked or uncooked. In some embodiments or examples, the meat or fish is uncooked (i.e., raw fish or meat). In some embodiments, the core is formed of fish, seafood, chicken, pork, beef, or a plant-based material (e.g., a fish or meat analogue. In some embodiments, the core is frozen. In some embodiments, the core is a fish fillet core. In some embodiments, the fish core or fish fillet core is a white fish core, optionally wherein the white fish core is selected from pangasius, saithe, pollock, hake, haddock, cod, (e.g., Atlantic cod) or halibut. In some embodiments, the core is a reconstituted fish core. In some embodiments, the core may be of a fillet-shape, which may have been pressure-formed into a fillet shape prior to coating.

In preferred embodiments, the core may be present in an amount that is from 50 to 70 wt. % by weight of the coated food product, more preferably from 55 to 78 wt. % of the coated food product, more preferably from 60 to 65 wt. % of the coated food product. In some embodiments, the core may be present in an amount that is at least 50 wt. %, or at least 55 wt. %, or at least 57.5 wt. %, or at least 60 wt. %, of the coated food product. In some embodiments, the core may be present in an amount that is less than 70 wt. % of the coated food product, or less than 65 wt.% of the coated food product.

### Dust Layer

The coated food product comprises a dust layer disposed on the core, and the method of the invention may comprise disposing a dust layer on the core (i.e., to form a dust-coated core). The dust layer may otherwise be referred to as a pre-dust layer. In some embodiments, disposing the dust layer on the core is achieved by a flour applicator. In some examples, the dust layer is applied using a GEA OptiFlour.

The dust layer of the present invention and method is found to be integral to prevent moisture leakage and splitting of the core when the coated food product is subsequently cooked by the consumer (e.g., after freezing).

The dust layer is also found to promote adhesion of the batter layer. In some embodiments, the dust layer comprises rusk, for example, a wheat rusk or wheat flour rusk. In some embodiments, the dust layer comprises at least 50 wt.% wheat flour by weight of the dust layer, or at least 60 wt.%, or at least 70 wt.%, or at least 80 wt.%, or at least 90 wt.% wheat flour by weight of the dust layer. In some embodiments, the dust layer may comprise wheat flour, and optionally one or more of salt and/or a raising agent such as E503(i) and E503(ii) and/or a flavouring. In some embodiments, and examples, the flavoring may comprise one or more of tomato powder, onion powder, garlic powder, thyme extract, mushroom extract or a combination thereof.

In some embodiments, the rusk is a fine rusk, preferably comprising wheat flour. In some embodiments, 100% of particles in the rusk have a particle size of less than 2 mm, as determined by sieve analysis. In some embodiments, 95% of the particles in the rusk have a particle size of less than 0.5 mm as determined by sieve analysis (i.e., 95% of particles have a particle size of less than 0.5mm as determined by sieve analysis (i.e., 95% of particles are not retained by a 0.5 mm sieve, ASTM 35, or 35 mesh)

In preferred embodiments, the dust layer is present in the coated food product in an amount from 2.5-5 wt. % by total weight of the coated food product, preferably from 2.75-4.5 wt. %, or a 3-4 wt. % by total weight of the coated food product. In some embodiments, the dust layer is present in the coated food product in an amount greater than 1 wt. % (e.g., 1 wt.% to 5 wt.%), or greater than 2 wt. % (e.g., 2 wt.% to 5 wt.%), or greater than 3 wt.% (e.g., 3 wt.% to 5 wt.%), or greater than 3.5 wt.% of the coated food product (e.g., 3.5 wt.% to 5 wt.%). In some embodiments, the dust layer is present in the coated food product in an amount less than 5 wt.% (e.g., 2.5 wt.% to 5 wt.%), or less than 4 wt.% (e.g., 2.5 wt.% to 4 wt.%) of the coated food product. The dust layer is found to be key to trap in moisture from the core during subsequent cooking by the consumer, which prevents the coating layer from splitting.

In some embodiments, the dust layer covers at least 95 wt.% of the core. In preferred embodiments, the dust layer completely surrounds the core (i.e., the dust layer surrounds 100% of the core).

### Batter layer

The coated food product comprises a batter layer disposed on the dust layer, and the method of the invention may comprise disposing the batter layer on the dust layer of the coated food product. The batter layer may be described as an external batter layer if the core comprises another batter layer, i.e., internal batter layer.

In some embodiments, the coated food product comprises 15 to 22 wt.% batter layer, more preferably from 16 wt.% to 20 wt.%, or from 17 wt.% to 19 wt.% batter layer. In some embodiments, the coated food product comprises more than 15 wt.% batter layer (e.g., 15 wt.% to 22 wt.%), or more than 16 wt.% batter layer (e.g., 16 wt.% to 22 wt.%), or more than 17 wt.% batter layer (e.g., 17 wt.% to 22 wt.%), or the coated food product comprises more than 18 wt.% batter layer (e.g., 18 wt.% to 22 wt.%). In some embodiments, the coated food product comprises less than 22 wt.% batter layer (e.g., 15 wt.% to 22 wt.%), or less than 21 wt.% batter layer (e.g., 15 wt.% to 21 wt.%), or less than 20 wt. % batter layer (e.g., 15 wt.% to 20 wt.%), or the coated food product comprises less than 19 wt.% batter layer (e.g., 15 wt.% to 19 wt.%).

In some embodiments, the batter layer comprises flour. In an embodiment, the batter layer comprises 60 wt.% to 90 wt.% flour by weight of the batter layer. In some embodiments, the batter layer comprises 65 wt.% to 85 wt.% flour by weight of the batter layer. In some embodiments, the batter layer comprises 70 wt.% to 80 wt.% flour by weight of the batter layer. In some embodiments, the flour is wheat flour, maize flour, or a combination thereof. In some embodiments, the flour is wheat flour, or a combination of wheat flour and maize flour. In some embodiments the batter layer comprises starch, preferably maize starch. In some embodiments, the batter layer comprises 5 wt.% to 25 wt.% starch, or 7 wt.% to 22 wt.% starch, or 10 wt. % to 20 wt.% starch. In some embodiments, the batter comprises one or more flavorings. In some embodiments, the batter layer comprises 5 wt.% to 15 wt.% flavorings. Flavorings may otherwise be referred to as flavorants in the art. In some examples, the one or more flavorings may be selected from tomato power, mushroom extract, turmeric extract, black pepper, thyme extract garlic powder, onion powder, red bell pepper powder, lime oil, sugar, chilli powder (e.g., cayenne chilli powder), salt or a combination thereof. In one example, the batter layer comprises tomato powder, sugar, mushroom extract, salt, white pepper, and thyme extract. In an alternative example, the batter layer comprises garlic powder (e.g., 1 to 5 wt.% of the batter layer), onion powder (e.g., 1 to 5 wt.% of the batter layer), salt (e.g., 1 to 5 wt.% of the batter layer), red bell pepper powder (e.g., 0.5 to 1 wt.% of the batter layer), lime oil (e.g., 0.5 to 1 wt.% of the batter layer), cayenne chilli (e.g., 0.5 to 1 wt.% of the batter layer) and sugar (e.g., 0.1 to 1 wt.% of the batter layer). In another example, the batter layer may comprise salt (e.g., 0.5 to 1 wt.% of the batter layer), black pepper (0.5 to 1 wt.% of the batter layer) and optionally turmeric extract (e.g., 0 to 0.1 wt.% of the batter layer). In some embodiments, the batter layer may comprise one or more colorants (e.g., E160(c)). The colorants may be present in an amount from 0.05 wt.% to 0.5 wt.% of the batter layer, or from 0.075 wt.% to 0.125 wt.% of the batter layer. In some embodiments, the batter layer may comprise one or more anti-caking agents (e.g., E551). In some embodiments, the batter layer does not comprise lemon juice concentrate and/or egg.

In some embodiments, the batter layer comprises:
60 to 90 wt.% flour, or 65 wt.% to 85 wt.% flour, or 70 to 80 % flour, optionally wherein the flour is wheat flour or wheat flour in combination with maize flour,
5 wt.% to 25 wt.% starch, or 7 wt.% to 22 wt.% starch, or 10 wt.% to 20 wt.% starch, optionally wherein the starch is maize starch, and
5 to 15 wt.% flavourings, and
optionally one or more of an anti-caking agent or colorant.

The batter layer can be formed from a batter mixture which is disposed on the dust layer. Since the batter layer is formed from the batter mixture, the batter layer comprises the same components as described for the batter mixture. In some embodiments, the batter mixture has a viscosity with a flow time of between 10 and 30 seconds as determined by a viscosity flow cup, more preferably a viscosity with a flow time of between 12 and 22 seconds as determined by a viscosity flow cup, more preferably a viscosity with a flow time of between 14 and 22 seconds as determined by a viscosity flow cup. The viscosity flow cup used may be a B6 viscosity flow cup. A batter mixture with a viscosity within this range has optimal stability and suitability for use in industrial coating lines, and is such that the consistency is strong enough to hold onto the breadcrumbs, more particularly when combined with breadcrumbs that have or comprise an extra large particle size of greater than 5.6 mm. Since the viscosity of the batter mixture varies depending on the composition of the batter mixture (e.g., amounts of flour, and amounts and types of flavourings etc), the viscosity of the batter mixture can be modified by adjusting the water content of the batter mixture. In some embodiments, the water ratio of the batter mixture is between 1:1 to 2:1 for water: batter components, more preferably between 1.25: to 1.75:1 1 for water batter layer components.

In some embodiments, the method comprises disposing a batter mixture on the dust layer to form a batter layer disposed on the core. In some embodiments, the disposing a batter mixture on the dust layer comprises dipping the dust-coated core in the batter mixture. In some embodiments, disposing the batter mixture around the core is achieved by pouring the batter mixture over a dust-coated core, e.g., while the dust-coated core is conveyed on a line or belt. In some embodiments, the batter layer is applied using a GEA OptiCoater (Wetmix). In some embodiments, the batter later surrounds at least 95 wt.% of the dust layer. In preferred embodiments, the batter layer completely surrounds the dust layer (i.e., the batter layer surrounds 100% of the core).

### Breadcrumbs/Breadcrumb Layer

The coated food product comprises breadcrumbs disposed on the batter layer, and the method of the invention may comprise disposing the breadcrumbs on the batter layer of the coated food product. In some embodiments, the breadcrumbs are spray-coated with oil prior to being disposed on the batter layer, and the spray-coated breadcrumbs are then disposed on the batter layer. In some embodiments, the breadcrumbs have not been spray-coated prior to being disposed on the batter layer, (i.e., the breadcrumbs are spray-coated after they have been disposed on the batter layer). In some embodiments, the breadcrumbs comprise wheat flour. The breadcrumbs can be obtained from commercial sources (e.g., Newly Weds).

In some embodiments, the coated food product comprises 11 wt.% to 14 wt.% breadcrumbs, more preferably between 12 wt.% and 13.5 wt.% breadcrumbs, or even more preferably between 12.5 wt. % and 13 wt.% breadcrumbs. In some embodiments, the coated food product comprises more than 11 wt.% breadcrumbs, or more than 12 wt.% breadcrumbs (e.g., 12 wt.% to 14 wt.%). In some embodiments, the coated food product comprises less than 14 wt.% breadcrumbs, or less than 13wt. % breadcrumbs (e.g., 11 wt.% to 13 wt.%).

The breadcrumbs preferably completely surround the batter layer, i.e., to form one or more breadcrumb layer. As described herein, the terms breadcrumbs and breadcrumb layer may be used interchangeably. In some embodiments, the breadcrumbs have a coating coverage of at least 80% of the batter layer, preferably at least 85% of the batter layer, preferably at least 90% of the batter layer, or more preferably at least 95% of the batter layer, or even more preferably 100% of the batter layer. In some embodiments, the breadcrumbs or breadcrumb layer comprises more than one or more layer of breadcrumbs.

In some embodiments, the breadcrumbs and/or breadcrumb layer comprises wheat flour, e.g., at least 50 wt.% by weight of the breadcrumb layer, or at least 60 wt.% or at least 70 wt.%, or at least 80 wt.%, or at least 90 wt.% wheat flour. In some embodiments, the breadcrumbs and/or breadcrumb layer comprise yeast, e.g., 1 - 5 wt.% yeast by weight of the breadcrumb layer. In some embodiments, the breadcrumbs and/or breadcrumb layer comprises fragments of tortilla chips, (e.g., tortilla triangles) which are optionally made from maize flour, wheat flour, salt and sugar. In some embodiments and examples, the tortilla triangles are present in an amount of 15 wt.% - 35 wt.% by weight of the breadcrumb layer, or from 20 wt.%- 30 wt.% by weight of the breadcrumb layer. In some embodiments, the breadcrumb layer may comprise one or more flavourings. The inclusion of one or more flavourings is made possible using a spray-coating method as opposed to a frying method where flavourings instead are only included solely in the batter layer to avoid burning. Inclusion of flavourings in the breadcrumb layer contributes to improved taste and visual appearance of the product. In some embodiments, the flavorings are present in an amount up to 25 wt.% of the breadcrumb layer, or up to 20 wt.% of the breadcrumb layer, or up to 15 wt.% of the breadcrumb layer, or between 0.5 wt.% to 20 wt.% of the breadcrumb layer, or between 0.5 wt.% to 15 wt.% of the breadcrumb layer. In some embodiments, the flavourings may include one or more of herbs (e.g., parsley and/or thyme), red pepper powder or dried tomato. In some examples, the flavorings may include one or more of red pepper powder (e.g., from 0.5 wt.% to 10 wt.% of the breadcrumb layer, more preferably between 1 - 5 wt.% by weight of the breadcrumb layer), herbs (e.g., from 0.25 - 10 wt.% by weight of the breadcrumb layer, more preferably from 0.5 wt.% to 5 wt.% of the breadcrumb layer), or dried tomato (e.g., from 0.5 to 15.wt.% of the breadcrumb layer, more preferably from 5 - 10 wt.% of the breadcrumb layer). In some embodiments, the breadcrumbs comprise oil. In some embodiments, the oil is a vegetable oil selected from rapeseed oil, olive oil or sunflower oil. In some embodiments, the oil is present in an amount up to 6 wt.% by weight of the breadcrumb layer, or up to 5 wt.% by weight of the breadcrumb layer, e.g., from 0.1 wt.% -5 wt.% of the breadcrumb layer, and in some examples, from 1 wt.% - 5 wt.% by weight of the breadcrumb layer. In some embodiments, the breadcrumbs comprise salt. In some embodiments, the salt is present in an amount from 0.5 wt.% to 5 wt.% of the breadcrumb layer.

In one embodiment and example, the breadcrumbs and/or breadcrumb layer comprises 50-60 wt.% wheat flour, 1-5 wt.% yeast, 1-5 wt.% salt, 5-10 wt.% dried tomato, 1.5 - 6 wt.% vegetable oil (e.g., olive oil), 1-5 wt.% herbs (e.g., thyme and parsley) by weight of the breadcrumb layer. In another embodiment and example, the breadcrumbs and/or breadcrumb layer comprise 70 to 80 wt.% wheat flour, 1-5 wt.% yeast, 1-5 wt.% salt, 20-30 wt.% tortilla triangles (e.g., made from maize flour, wheat flour, salt and sugar), 1-5 wt.% red pepper, 1-5 wt.% vegetable oil (e.g., rapeseed oil), and 0.5-1 wt. % herbs by weight of the breadcrumb layer. In one embodiment and example, the breadcrumbs and/or breadcrumb layer comprise 90 to 99 wt.% wheat flour, 1-5 wt.% sourdough (i.e., dried wheatgerm sourdough), 1-5 wt.% yeast, 0.5-1 w.% parsley and 0.1-0.5 wt.% vegetable oil (e.g., rapeseed oil), by weight of the breadcrumb layer.

The breadcrumbs may have any suitable particle size. However, in certain aspects of embodiments of the present invention, the present inventors developed a novel product with a unique crispy texture and a novel handmade appearance. In such embodiments, which are preferred embodiments of the invention, at least a portion of the breadcrumbs in the breadcrumb layer have a particle size of at least 5.6 mm as determined by sieve analysis (e.g., between 5.6 mm and 9 mm). Breadcrumbs with a particle size of at least 5.6 mm may be referred to as "extra large particles" or "flakes. In some embodiments, the breadcrumbs may comprise between up to 20 wt.% breadcrumbs with a particle size of at least 5.6 mm as determined by sieve analysis by weight of the breadcrumbs, or up to 15 wt.% breadcrumbs with a particle size of at least 5.6 mm, or up to 10 wt.% breadcrumbs with a particle size of at least 5.6 mm as determined by sieve analysis.

In some embodiments, the breadcrumbs may comprise at most 15 wt.% of breadcrumbs with a particle size of at least 5.6 mm, or at most 12.5 wt.% of breadcrumbs with a particle size of at least 5.6 mm, or preferably at most 10 wt.% of breadcrumbs with a particle size of at least 5.6 mm. While the presence of extra large particles or flakes provides the product with a unique appearance and texture, it was found during production that too many extra large particles could not as effectively stick to the surface of the coated food production during mass-production leading to wastage. Further, too many extra large particles or flakes could somewhat affect oil uptake in the spray-coating step. In preferred embodiments, the breadcrumbs may comprise between 5 wt.% and 20 wt.% breadcrumbs with a particle size of at least 5.6 mm, or preferably between 5 wt.% and 15 wt.% breadcrumbs with a particle size of at least 5.6mm, or between 5 wt.% and 10 wt.% of breadcrumbs with a particle size of at least 5.6 mm.

In some embodiments, the breadcrumbs comprise breadcrumbs with a particle size between 3.35 mm and 5.6 mm, more preferably 20 wt.% to 65 wt.% of breadcrumbs with a particle size between 3.35 and 5.6mm, more preferably between 25. wt.% to 60 wt.%, of breadcrumbs with a particle size between 3.35 and 5.6mm. Breadcrumbs with a particle size between 3.35 mm and 5.6 mm may be described as "large particles" herein. These larger particles also contribute to the crisp texture of the breadcrumb layer.

In preferred embodiments, the breadcrumbs comprise at least a portion of breadcrumbs with a particle size greater than 3.35 mm as determined by sieve analysis. This encompasses both "extra large particles" and "large particles" described herein. In some embodiments, the breadcrumbs comprise at least 20 wt.%, or at least 25 wt.%, or at least 30 wt.%, or at least 40 wt.%, or at least 50 wt.% of breadcrumbs with a particle size greater than 3.35 mm as determined by sieve analysis.

In some embodiments, the breadcrumbs comprise at least 50 wt.%, or at least 60 wt.%, or at least 70 wt.%, of breadcrumbs with a particle size greater than 1.7 mm as determined by sieve analysis.

In some embodiments, at least 25 wt.% of breadcrumbs have a particle size of less than 3.35 mm. In some embodiments, at least 30 wt.%, or at least 40 wt.%, or at least 50 wt.% of breadcrumbs have a particle size of less than 3.35 mm. In some embodiments, at least 10 wt.%, or at least 15 wt.% of breadcrumbs have a particle size of less than 1.7 mm. In some instances, a certain wt.% of smaller particles is preferred for better coverage of the batter layer. In some embodiments, the breadcrumbs comprise between 15 wt.% and 55 wt.% of particles between 1.7 mm and 3.35 mm, more preferably between 20 wt.% and 50 wt.% of particles between 1.7 and 3.35 mm.

In some examples, the breadcrumbs have a particle distribution wherein:
up to 20 wt.% of particles larger than 5.6 mm, preferably up to 10 wt.% of particles larger than 5.6 mm
between 20 wt.% and 65 wt.% of particles with a particle size of between 3.35mm and 5.6 mm, and more preferably between 25 wt.% and 60 wt.%
between 15 wt.% and 55 wt.% of particles with a particle size of between1.7 mm and 3.35 mm, and more preferably between 20 wt.% and 50 wt.%, and
up to 30 wt.% of particles smaller than 1.7 mm, more preferably between 15 wt.% and 25 wt.%. Breadcrumbs having this particle size distribution provided a coated food product with an optimal crispy texture and unique "handmade" appearance.

The breadcrumbs may be disposed on the batter layer using any suitable equipment, e.g., a GEA Opti Crumb.

### Freezing

The methods of the present invention may also comprise a freezing step, i.e., immediately after the spray-coating step. In the method that comprises a freezing step, the method does not comprise heating or cooking the product prior to the freezing step.

In some embodiments, the freezing occurs via forced air freezing. In some embodiments, the freezing occurs at a temperature of less than -15°C. In some embodiments, the freezing occurs at a temperature between -15 °C and -40 °C. In some embodiments, the method further comprises packaging the frozen food product after freezing. Once frozen, and optionally packaged, the frozen food product may be stored for up to 15 months, or up to 1 year, at a temperature below -15 °C, more preferably at- 18°C.

In some embodiments, the method further comprises packaging the frozen food product after freezing. Once frozen, and optionally packaged, the frozen food product may be stored for up to 15 months, or up to 1 year, at a temperature below -15 °C, more preferably at- 18°C.

In some embodiments, the method comprises a cooking step. The cooking step occurs after step freezing the product and, if present, the packaging step. The cooking may include one or more of oven-baking, pan-frying, air-frying or grilling. The cooking step is intended to be performed by the consumer at home and the product is sold in a frozen state.

### Coated Food Product

Described herein is a coated food product comprising a core;
a dust layer disposed around the core
a batter layer disposed around the dust layer,
a breadcrumb layer disposed on the batter layer; and
an oil layer disposed on the breadcrumbs, wherein the oil layer is present in an amount of less than 5 wt.% of the coated food product. In some embodiments, the oil layer is present in an amount from 3.5 wt.% to 5 wt.% of the coated food product.

In some embodiments, the coated food product is a frozen coated food product. In some embodiments, the food is a manufactured coated food product (e.g., a mass-produced food product formed using a production line). The frozen food product is suitable for cooking or oven-baking (e.g., by the consumer at home)

The core, dust layer, batter layer, breadcrumbs and oil layer are or may be as described elsewhere herein.

In some embodiments, the coated food product may comprise
50 - 70 wt.% core
2.5 - 5 wt.% dust layer
16 to 20 wt.% batter layer
11 to 14 wt.% breadcrumbs and/or breadcrumb layer, and up to 5 wt.% of oil layer (i.e., a spray-coated oil layer) disposed on the breadcrumbs.

In some embodiments, the oil layer (i.e., spray-coated oil layer) is present in an amount of less than 5 wt.% of the coated food product, or less than 4.5 wt.% of the coated food product. In some examples, the spray-coated oil layer is present in an amount of less than 4.25 wt.%, or less than 4 wt.%, or less than 3.75 wt.% of the coated food product. In some embodiments, the spray-coated oil layer is present in an amount of 1 wt.% to 5 wt.% of the coated food product, or from 2 wt.% to 4.75 wt.%, or from 2.5 wt.% to 4.5 wt.%, or from 2.75 wt.% to 4.5 wt.%, or from 3.5 wt.% to 4.5 wt.% of the coated food product.

In some embodiments, the oil layer may have a peroxide value of less than 10 mEq of O₂/kg, or less than 7 mEq of O₂/kg, or less than 5 mEq of O₂/kg, as determined by iodometric endpoint determination. The peroxide value may be determined by iodometric endpoint determination using sox-let extraction, for example, using the method reported in the analysis report Reg CEE 2568/1991 Annex III Reg UE 1784/2016. The peroxide value is found to be lower than for products formed by comparative methods wherein the oil layer on the surface of the product has been cooked, heat-treated, or deep-fried. This can be advantageous for shelf-life, decreased rancidity and freshness of the product. This also avoids any rancidity flavour.

The food product of the present invention may have any suitable shape. In some embodiments (e.g., wherein the core is a fillet), the coated product may have a fillet-shape.

In some embodiments, the coated food product has a mass of between 80 g and 140 g, more preferably between 90 g and 130 g, even more preferably between 100 g and 120 g and even more preferably about 110 g.

The coated food product may have improved or good nutritional characteristics. In some embodiments, the coated food product may be one or more of low in saturated fat, low in sugars, rich in protein, rich in vitamin D, a source of niacin, a source of vitamin B12, a source of selenium or a combination thereof.

In some embodiments, the coated food product may have improved nutrition as determined by any well-known industry standard. In some embodiments, the coated food product may have a nutri-score of C or above, e.g., a nutri-score of C, B or A, or a nutri-score of B or above, e.g., B or A. All nutri-scores described herein may be determined based on the 2022 nutri-score standard. In some examples, the coated food product has a nutri-score of B. Nutri-score relates to the 5-colour nutrition label or 5-CNL which is a well-known nutritional rating system known in the art, from A-E where A denotes a most preferable range of scores and E denotes a most detrimental range of scores. Details of how the nutri-score is calculated is well-known to someone skilled in the art (see, e.g., https://en.wikipedia.org/wiki/nutri-score).

In some embodiments, the coated food product has a total fat content of less than 8 wt.%, more preferably less than 7 wt.%, more preferably less than 6 wt.%, and more preferably a total fat content of less than 5.5 wt.%, In some embodiments, the coated food product has a total fat content of 4 wt.% and 6 wt.%, or between 4 wt.% and 5.5 wt.%.

In some embodiments, the coated food product has a saturated fat content of less than 2 wt.%, more preferably less than 1 wt.%, and even more preferably less than 0.75 wt.%. In some embodiments, the coated food product has a total fat content of between 0.5 wt.% and 1 wt.%, or between 0.6 wt.% and 0.8 wt.%. The resultant products are low in saturated fat.

In some embodiments, the coated food product has an energy (kJ) content of less than 750 kJ per 100 g of product, or less than 700 kJ per 100 g of product. In some embodiments, the coated food product has an energy (kJ) content of between 500 and 750 kJ, more preferably between 650 and 750 kJ per 100 g of product.

In some embodiments, the coated food product has a kcal content of less than 200 per 100g of product, more preferably less than 175 g per 100 g of product, for example, between 150 g and 175 g per 100 g of product.

In some embodiments, the coated food product has a protein content of at least 10 wt.%, more preferably a protein content of at least 11 wt.%, or a protein content of at least or equal to 12 wt.%, for example, a protein content of between 11 wt.% and 15 wt.%, or about 12 wt.%. The resulting products are high in protein.

In some embodiments, the coated food product has a total carbohydrate content of less than 25 wt.%, more preferably a total carbohydrate content less than 20 wt.%, or more preferably a total carbohydrate content less than or equal to 18 wt.%. In some examples and embodiments, the coated food product has a carbohydrate content between 15 wt.% and 20 wt.%, or more preferably between 16 wt.% and 19 wt.%.

In some embodiments, the coated food product has a carbohydrate content of which sugars of less than 2 wt.%, or a carbohydrate content of which sugars of less than 1.5 wt.%, or a carbohydrate content of which sugars of less than 1 wt.%, or a carbohydrate content of which sugars of less than 0.5 wt.%. In some embodiments, the coated food product has a carbohydrate content of which sugars between 0.1 wt.% and 2 wt.%, or between 0.1 wt.% and 0.5 wt.%. In some examples and embodiments, the coated food product has a carbohydrate content which sugars of between 0.25 wt.% to 0.75 wt.%, and in other examples and embodiments, a carbohydrate content which sugars between 1 wt.% to 1.5 wt.%. The resulting products are low in sugars.

In some embodiments, the coated food product has a fibre content of at least 0.5 wt.%, or at least 0.75 wt.%. In some embodiments, the coated food product has a fibre content between 0.5 wt.% and 1.25 wt.%.

In some embodiments, the coated food product has salt content of less than 1.5 wt.%, more preferably less than 1 wt.%. Salt herein refers to sodium chloride. In some embodiments, the coated food product has a salt content of between 0.5 wt.% and 1 wt.%.

In some embodiments, the coated food product has a vitamin D content of at least 1 µg per 100 g, more preferably at least 1.5 µg per 100 g, for example, about 1.6 per 100 g.

In some embodiments, the coated food product comprises one or more of selenium, vitamin B12 or niacin or a combination thereof.

### Examples

### Example Method and Products of the Invention

The present inventors developed three different examples of the present invention, having different flavour profiles. For all 3 variants, the coating comprised a dust-layer, a batter layer and breadcrumbs applied to a frozen 68 g Pangasius fish fillet core. The exact composition dust layer, batter layer and breadcrumbs varied depending on the flavor of the final product.

The frozen cores were steamed and then dusted with a dust layer using an OptiFlour (GEA), battered using an Opti Coater (wetmix), and breadcrumbs are then disposed on the breadcrumb layer using an Opti Crumb (GEA). Breadcrumbs were sourced from the supplier Newly Weds.

The battered and breaded products were then spray-coated using a spray-coater manufactured by Costruzioni Meccaniche Industriali S.a.s. - Zampieri S.r.l., Ala (TN), Italy where the battered and breaded cores were spray-coated on a moving conveyor belt with a length of 3600 mm and width of 1200 mm for 15 seconds. The oil was spray-coated at a frequency of between 700-2100 g/min with a belt speed of 16 metres/minute, although a belt speed of 13.5 metres/minute can also be used. The residence tine of the samples within the spray-coater was 15 seconds. All example battered and breaded products with sprayed with rapeseed oil at a temperature between 60 and 80 °C. Compared with previous and different spray-coated products that had previously been made in-house for a different product, the spray-coating step can be improved such that (i) the belt was longer, (ii), the velocity of the belt was faster, (iii), more nozzles were used for spray-coating (e.g., 4 nozzles vs. 2), and (iv) the distance between the nozzles and the food product was increased. Differences (i) and (ii) can increase the capacity of the spray-coating step. Difference (iii) can improve oil uptake from the top. Difference (iv) can lead to a wider coverage of spraying which improved spray consistency and reduced dead space.

In trials, spray-coating temperatures that were too low (i.e., less than 50 °C) or too high (i.e., greater than 90 °C) altered the viscosity of the oil which affected the spray-coating step and altered oil uptake. A temperature between 60 and 80 degrees gave optimal results, wherein the spray-coated oil has an uptake of 3.64 wt.%.

The spray-coated product was frozen and stored at 18 degrees. No water loss was observed due to the absence of a heating or deep-frying step.

The final product has weight of 110 g as cooked. All products are low in saturated fat, low in sugars, rich in protein, rich in vitamin D. Further, all products provide a source of niacin, vitamin B12 and a source of selenium.

The example coated products have the following composition:

| | Weight (g) in 110g final product) | Wt.% of coated food product |
|---|---|---|
| ASC Pangasius fillet fish core | 68 | 61.82 |
| Dust | 4 | 3.64 |
| Batter | 20 | 18.18 |
| Breadcrumbs | 14 | 12.73 |
| Rapeseed oil | 4 | 3.64 |
| Water loss | 0 | 0 |

### Product 1 - Tomato & Thyme Focaccia

The following Example had the following components in the dust, batter, and breadcrumb layer.

Dust layer - rusk (made from: wheatflour, salt, raising agent (e503(ii))), tomato powder, sugar, salt, garlic powder, onion powder, mushroom extract (maltodextrin, mushroom extract), vegetable oil (rapeseed), thyme extract, anti-caking agent (e551). 95% of the rusk had a particle size of less than 0.5 mm as determined by sieve analysis.

Batter layer - wheatflour, maize flour, maize starch, tomato powder, sugar, mushroom extract (maltodextrin, mushroom extract), thyme, salt, white pepper, thyme extract, anti-caking agent (e551). The flow time of the batter mixture used to form the batter layer was 16 seconds on a B6 viscosity flow cup with a water ratio of 1.7:1.

Breadcrumb layer - breadcrumbs [made from: wheat flour (80-90%), yeast (1-5%), salt (1-5%), vegetable oil (olive (0.5-1.0%))]; dried tomato (5-10%); vegetable oil (olive (1-5%)), herbs (thyme, parsley) (1-5%).

The breadcrumbs were off-white in colour with red and green specks, with a flavor of cereal with tomato and herbs, and had the following particle size distribution.

| Size | Reference | wt.% of breadcrumbs |
|---|---|---|
| 9 mm sieve | BK3 | 0% |
| 5.6 mm sieve | BK4 | 10 % |
| 3.35 mm sieve | BK5 | 30-50 % |
| 1.7 mm sieve | BK6 | 30-50 % |
| Retained in Base | Pan (BK7) | 15-25% |

The resultant product is shown in Figure 1 (Top)

### Product 2- Tortilla Lime and Chili

### Dust layer - rusk comprising wheat flour, water, salt, Raising agent (E503(i) or (ii))

Batter layer - wheat flour (70-80%), maize starch (10-20%), garlic powder (1-5%), onion powder (1-5%), salt (1-5%), red bell pepper powder (0.5-1.0%), lime oil (0.5-1.0%), cayenne chilli (0.1-0.5%), sugar (0.1- 0.5%), colour (e160(c) (0.11%)). The flow time of the batter mixture used to form the batter layer was 20 seconds on a B6 viscosity flow cup with a water ratio of 1.5:1.

Breadcrumb layer - breadcrumbs [made from: wheat flour (50-60%), yeast (1-5%), salt (1-5%), vegetable oil (olive (0.5-1.0%))], tortilla triangles (wheat) (made from maize flour, wheat flour, salt, sugar) (20- 30%), red pepper (1-5%), vegetable oil (rapeseed (1-5%)), herbs (coriander leaf, parsley) (0.5-1.0%). The breadcrumbs were off-white in colour containing tortilla pieces with a flavor having cereal notes and had the following particle size distribution.

| Size | Reference | wt.% of breadcrumbs |
|---|---|---|
| 9 mm sieve | BK3 | 0% |
| 5.6 mm sieve | BK4 | 10 % max |
| 3.35 mm sieve | BK5 | 40-60 % |
| 1.7 mm sieve | BK6 | 20-40 % |
| Retained in Base | Pan (BK7) | 15-25% |

The resultant product is shown in Figure 1 (Bottom)

### Product 3- Sourdough Parsley

### Dust layer - rusk comprising wheat flour, water, salt, Raising agent (E503(i) or (ii))

Batter layer - Wheat Flour (70-80%), Maize Starch (10-20%), Salt (5-10%), Black Pepper (0.5-1.0%), Turmeric Extract (0-0.1%)
Breadcrumb layer - Breadcrumb [Made From: Wheat Flour (90-99%), Dried Wheatgerm Sourdough (Wheatgerm, Wheat) (1-5%), Yeast (1-5%), Salt (1-5%))], Parsley (0.5-1.0%), Vegetable Oil (Rapeseed (0.1-0.5%)). The breadcrumbs were off-white in colour with green specks with a flavor having cereal notes and had the following particle size distribution.

| Size | Reference | wt.% of breadcrumbs |
|---|---|---|
| 9 mm sieve | BK3 | 0% |
| 5.6 mm sieve | BK4 | 10 % max |
| 3.35 mm sieve | BK5 | 25-45 % |
| 1.7 mm sieve | BK6 | 30-50 % |
| Retained in Base | Pan (BK7) | 15-25% |

### Nutritional Characteristics of Products of the Invention

The Example products had the following nutritional characteristics. All 3 products had a nutri-score of B, and were low in saturated fat, low in sugars, rich in protein, rich in vitamin D. All 3 products provided a source of niacin, a source of vitamin B12 and a source of selenium.

### Example 1 - Tomato & Thyme Focaccia

| Nutritional Values | Per 100g | Per portion (110 g) |
|---|---|---|
| Energy (kJ) | 697 | 767 |
| Energy (kcal) | 166 | 182 |
| Fat (g) | 5.3 | 5.8 |
| Fat of which saturates (g) | 0.7 | 0.8 |
| Carbohydrates (g) | 17 | 19 |
| Carbohydrates of which sugars (g) | 1.4 | 1.6 |
| Fibre (g) | 1.0 | 1.1 |
| Protein (g) | 12 | 13 |
| Sodium (g) | 0.29 | 0.32 |
| Equivalent as salt(g) | 0.73 | 0.8 |
| Vitamin D (µg) | 1.6 | 1.7 |

### Example 2 - Tortilla Lime and Chili

| Nutritional Values | Per 100g | Per portion (110 g) |
|---|---|---|
| Energy (kJ) | 699 | 787 |
| Energy (kcal) | 166 | 187 |
| Fat (g) | 5.4 | 5.9 |
| Fat of which saturates (g) | 0.7 | 0.8 |
| Carbohydrates (g) | 17 | 19 |
| Carbohydrates of which sugars (g) | <0.5 | <0.5 |
| Fibre (g) | 0.8 | 0.9 |
| Protein (g) | 12 | 14 |
| Sodium (g) | 0.25 | 0.28 |
| Equivalent as salt(g) | 0.64 | 0.7 |
| Vitamin D (µg) | 1.6 | 1.7 |

### Example 3 - Sourdough Lemon and Parsley

| Nutritional Values | Per 100g | Per portion (110 g) |
|---|---|---|
| Energy (kJ) | 698 | 768 |
| Energy (kcal) | 166 | 182 |
| Fat (g) | 4.9 | 5.2 |
| Fat of which saturates (g) | 0.7 | 0.7 |
| Carbohydrates (g) | 18 | 19 |
| Carbohydrates of which sugars (g) | <0.5 | <0.5 |
| Fibre (g) | 0.8 | 0.9 |
| Protein (g) | 12 | 14 |
| Sodium (g) | 0.38 | 0.42 |
| Equivalent as salt(g) | 0.95 | 1 |
| Vitamin D (µg) | 1.6 | 1.7 |

### Consumer Research

During consumer research, the above-mentioned example products made by the method of invention received positive feedback. In one particular research (over 150 consumers), purchase intent was in line with expectations for a scalable and successful new product development. Additionally overall product liking and attributes (colour, taste, texture...) reached the benchmark for good product performance (Benchmark provided by Consumer Research Agency based on their database). During qualitative research, products were also praised for taste, texture and appearance which are direct results of the method of invention.

### Early trials and optimisation

At the start of research and development, there was an aim to develop new and improved methods for producing battered and breaded food products which avoided a deep-frying step.

Several methods for preparation of a food product were tested.

### Comparative Method (A)

A first method of preparation, without a pre-frying step, involved dipping a battered and breaded food product in cold sunflower oil for 15 seconds, followed by freezing at -35°C. The frozen food product was then oven-baked for consumption. The food product prepared by comparative method A were found to be very greasy with a lot of excess oil.

### Comparative Method (B)

A second comparative method (B) of preparation involved spray coating each battered and breaded core with 2 - 2.5 grams of sunflower oil, followed by oven-baking. The food product was then frozen at -35°C, and the frozen product was oven-baked for consumption. Using this method, 2 grams of water condensate was lost from the product weight. The texture of the coating was compromised.

### Spray-coating method (C)

The third tested method (C) of preparation involved spray coating a battered and breaded core with oil at various temperatures, followed by freezing at -35°C. The frozen products could then be oven-baked for consumption using standard methods.

The battered and breaded food product prepared by method C, which was spray-coated at a temperature of 70 degrees, showed oil reduction as compared to deep-fried products. Unlike the standard methods of battering and breading products, and unlike method (B), no water condensate or water loss was observed. Most importantly, the battered and breaded food product prepared by method C also performed well in terms of texture and taste performance after cooking.

Overall, a method comprising spray-coating a battered and breaded food product with oil, followed by freezing showed the best results in terms of oil reduction and sensory characteristics. Spray-coating at a temperature between 50-90 °C, and more preferably between 70 °C and 80 °C, ensured that the oil had a suitable viscosity enabling optimum oil uptake on the surface of the product.

### Breadcrumb Optimisation

In preferred embodiments of the present invention, the present inventors sought to develop a new unique product with a crispy and unique "handmade" appearance wherein the breadcrumb layer comprises extra-large particles or flakes (i.e., particles greater than 5.6 mm). In development, it was found that an optimum level of "extra-large" breadcrumbs should be included in the breadcrumb layer for the best results. While a certain wt.% of flakes was required to obtain the textural and visual benefits, too many extra large flakes (e.g., > 20 wt.%) led to too much loss and wastage during the production run. Including 10 wt.% of extra large flakes (i.e., particles greater than 5.6 mm) gave the optimal performance in terms of maintaining sensory properties and coverage of the batter layer while minimising waste during production.

### Defining the Optimal Temperature Range and Effect of the Spray-Coating Temperature on Level of Oil Uptake

For this project, the crumbs and the batters were specially designed to adapt to oil spraying technologies and tested intensively, for example:
- Crumbs particle size distributions
- Crumbs ingredients
- Batter viscosity and composition
- Batter optimal temperature
- Frozen core vs batter functionality

A factor of great importance during the creative process, and which was considered extensively for this innovative project with new technology, was the uniformity and distribution of oil across the product. It was found that the right temperature of the oil has to be used during the process in order to obtain a product with optimal properties.

During initial kitchen trials, rapeseed oil was initially sprayed at ambient temperature (~ 22 °C). Unfortunately, at such temperatures, the resultant products had poor properties. In particular, the oil was not distributed uniformly when sprayed at ambient temperature and there was a poor distribution of the oil along the surface.

The oil was next sprayed at a temperature of 45 °C, which was achieved by incubating the oil in warm water before spraying. The resulting spray-coated food product was slightly improved compared to spray-coating at room temperature but a good distribution of the amount of oil over the entire sample was still not achieved. Further, the time necessary for the breading to absorb the oil took a long time due to the size of the oil drops produced when sprayed at this temperature.

The oil was next sprayed at a temperature of around 75 °C. This was achieved by incubating the oil in hot water before spraying. The resulting spray-coated food product was significantly improved compared to those formed from spray-coating at lower temperatures. Indeed, the oil mist was easily sprayed on the sample with a much more homogenous distribution. The oil drop size was also smaller meaning that the level of oil uptake was much improved, and absorbed much more quickly by the coating.

The spray-coating temperature also had a significant bearing on the appearance and greasiness of the product. As shown in Figures 3 and 4, improved appearance of final products was observed when spray-coated at 75 °C (top photos) as compared to ambient temperatures (bottom photos). These factors are related to how fast the breadcrumbs can absorb the oil (i.e., before any subsequent freezing step) and how fast the oil is distributed on the sample. For the products sprayed at ambient temperatures, there is oil uptake and the overall distribution of oil is poor, and pools of oil can be seen on the surface of the sample even after resting for 30 seconds. In contrast, products sprayed at 75 °C demonstrated good levels of oil uptake with minimised oil pooling and a homogenous distribution of oil.

The appearance of products sprayed with different spray-coating oil temperature after freezing was also compared, with products of the invention having a much improved appearance. Figure 5 (left) shows a product sprayed with oil at a controlled range of 70 °C to 80 °C, as compared to (right) which shows a product spray coated with oil at a temperature around 40 °C. This improved appearance again can again be attributed to improved oil uptake by the breadcrumbs before freezing. At 40 degrees, the oil is sprayed with bigger drops which is less effectively absorbed and which pools on the surface. This results in a "white layer" after freezing from the over-saturated oil layer. This "white layer" is minimised or less noticeable for a product that is spray-coated at 70 degrees, since the oil is absorbed more quickly and more effectively prior to the freezing step.

The size of the breadcrumbs also contributed to the amount and extent of effective oil uptake. Larger breadcrumbs, and more particularly extra-large sized breadcrumbs (e.g., breadcrumbs with a particle size of 5.6 mm or greater) were found to absorb the spray-coated oil drops a lot faster and more effectively.

This testing demonstrated that spraying oil at high temperatures e.g., between 50 °C and 90 °C, but preferably between 60 °C and 80 °C, and most optimally between 70 °C and 80 °C provide the best results for producing a spray-coated product that still has commercially acceptable properties. However, compared to deep-frying, the spray-coating enables the energy usage of heating the oil still at a lower level as compared with the energy usage required by deep-frying, along with other benefits. Other benefits include a higher retention of larger sized crumb particles, which are otherwise prone to becoming dislodged in a deep-frier, with said larger sized breadcrumbs also absorbing the oil drops faster and more effectively. These results can be replicated on a spray-coating machine, including for sunflower oil.

## Claims

1. A method of making a coated food product, the coated food product comprising a core, a dust layer disposed on the core, a batter layer disposed on the dust layer, and breadcrumbs disposed on the batter layer, wherein the method comprises spray-coating the breadcrumbs with an oil at a temperature between 50 °C and 90 °C, and wherein the oil has a melting point of less than 0 °C.

2. The method of claim 1, further comprising freezing the product.

3. The method of any preceding claim, wherein the method comprises a) disposing the breadcrumbs on the batter layer before spray-coating the breadcrumbs or b) spray-coating the breadcrumbs before disposing the breadcrumbs on the batter layer.

4. The method of any preceding claim, wherein at least a portion of the breadcrumbs have a particle size of at least 5.6 mm as determined by sieve analysis which are present in an amount that is up to 20 % by weight of the breadcrumbs, more preferably in an amount that is up to 10 % by weight of the breadcrumbs, and even more preferably in an amount of between 5 wt.% and 10 wt.% of the breadcrumbs.

5. The method of any preceding claim, wherein at least 25% of the breadcrumbs have a particle size of at least 3.35 mm as determined by sieve analysis, and more preferably at least 35% of the breadcrumbs have a particle size of at least 3.35 mm as determined by sieve analysis.

6. The method of any preceding claim, wherein the breadcrumbs comprise flavourings, more preferably between 0.5 wt.% to 20 wt.% flavourings by weight of the breadcrumbs.

7. The method of any preceding claim, wherein the batter layer is formed by disposing a batter mixture on the dust layer, and wherein the batter mixture has a flow time of between 10 and 30 seconds as determined by a viscosity flow cup

8. The method of any preceding claim, wherein the spray coating is at a temperature of between 60 and 80 °C

9. The method of any preceding claim, wherein the spray coating is at a temperature of between 70 and 80 °C

10. The method of any preceding claim, wherein the oil is rapeseed oil or sunflower oil, preferably rapeseed oil.

11. The method of any preceding claim, wherein the breadcrumbs are spray-coated for less than 20 seconds, more preferably spray-coated for between 10 to 20 seconds and/or wherein the breadcrumbs are spray-coated with oil at a frequency of 700 to 2100 g/min

12. The method of any preceding claim, wherein the breadcrumbs are spray-coated with at least 4 nozzles and/or wherein the distance between the breadcrumbs and nozzles used for spray-coating is at least 150 mm, preferably between 150 mm and 250 mm.

13. The method of any preceding claim, wherein the core is a fish fillet.

14. The method of any preceding claim, wherein the dust layer comprises rusk.

15. A coated food product producible by the method of any one of claims 1-13, or a frozen coated food producible by the method of any one of claims 2-13, comprising a core; and
a dust layer disposed around the core
a batter layer disposed around the dust layer,
a breadcrumb layer disposed on the batter layer; and
an oil layer disposed on the breadcrumb layer, wherein the oil layer is present in an amount of less than 5 wt.% of the food product, optionally
comprising
50 - 70 wt.% core
2.5 - 5 wt.% dust layer
16 to 20 wt.% batter layer
11 to 14 wt.% breadcrumb layer
